# EUROPÄISCHE PATENTSCHRIFT

(11) **EP 2 313 290 B1**
(45) Veröffentlichungstag und Bekanntmachung des Hinweises auf die Patenterteilung: **13.03.2013**
(21) Anmeldenummer: 09777601.7
(22) Anmeldetag: 01.08.2009
(51) Int. Cl.: B60N 2/20, B60N 2/22

(54) **BESCHLAG FÜR EINEN FAHRZEUGSITZ**
FITTING FOR A VEHICLE SEAT
FERRURE POUR SIÈGE DE VÉHICULE

(30) Priorität: 18.08.2008 DE 102008038581
(43) Veröffentlichungstag der Anmeldung: 27.04.2011
(73) Patentinhaber: KEIPER GmbH & Co. KG, 67657 Kaiserslautern (DE)
(72) Erfinder: THIEL, Peter, 42899 Remscheid (DE)
(74) Vertreter: Loock, Jan Pieter
(86) Internationale Anmeldenummer: PCT/EP2009/005592
(87) Internationale Veröffentlichungsnummer: WO 2010/020340

(56) Entgegenhaltungen:
- WO-A1-02/062614
- DE-B3-102004 018 744
- DE-C1- 10 120 854
- FR-A1- 2 900 605

## Beschreibung

Die Erfindung betrifft eine Anordnung für einen Fahrzeugsitz, mit den Merkmalen des Oberbegriffs des Anspruches 1.

Aus der DE 102 06 303 A1 ist eine als Beschlag ausgebildete Anordnung dieser Art für ein zweitüriges Kraftfahrzeug bekannt, welcher dazu dient, durch das vorwärts erfolgende Freischwenken der Lehne den Zugang zum Fond zu ermöglichen und für den Gebrauch durch einen Insassen verschiedene Neigungseinstellungen der Lehne zur Verfügung zu stellen. Das erste Beschlagteil eines Einstellbeschlags ist mit dem Sitzteil des Fahrzeugsitzes verbunden, während an das zweite Beschlagteil des Einstellbeschlags eine mit der Lehne verbundene, ein drittes Beschlagteil aufweisende Freischwenkeinheit angeschweißt ist. Hierzu ist auf einen ringförmigen Absatz des zweiten Beschlagteils ein Lagerring gepresst, welcher das dritte Beschlagteil lagert. Ein Doppelflanschring, welcher ein Außenelement bildet, weist eine mit einem Rand versehene zentrale Öffnung auf, welche den ein Innenelement bildenden Lagerring aufnimmt. Zwei kurze Schweißnähte verbinden den Doppelflanschring mit dem Lagerring. Für ein Laserschweißen mit Zusatzwerkstoff wäre ein Spalt zum Einbringen des Schweißzusatzwerkstoffs vorzuhalten.

Das Dokument WO 02/062614 zeigt eine Anordnung gemäβ dem Oberbegriff des Anspruchs 1

Der Erfindung liegt die Aufgabe zu Grunde, eine Anordnung der eingangs genannten Art für ein Laserschweißen mit Zusatzwerkstoff zu verbessern. Diese Aufgabe wird erfindungsgemäß durch eine Anordnung mit den Merkmalen des Anspruches 1 gelöst. Vorteilhafte Ausgestaltungen sind Gegenstand der Unteransprüche.

Indem der Rand der Öffnung des Außenelementes über den größten Teil seines Umfangs unter Bildung eines definierten radialen Spaltes vom Innenelement beabstandet ist, und eine Schweißnaht in den Spalt eingebracht ist, wird das Außenelement verzugsarm mit dem Innenelement verbunden. Tragpunkte ermöglichen die Bildung des Spaltes in einer nahezu gleich bleibenden Breite, welche nicht die Mindest-Breite unterschreitet und auch nach dem Schweißvorgang erhalten bleibt, wenn der Spalt mit einem aufgeschmolzenen und wieder erstarrenden Zusatzwerkstoff gefüllt ist. Wenn die Breite des Spaltes geringfügig größer ist als die Mindest-Breite, was vorzugsweise der Fall ist, ergibt sich eine schwimmende Lagerung des Außenelementes auf dem Innenelement (oder umgekehrt). In bevorzugter Ausbildung der Verbindungsstelle zwischen Außenelement und Innenelement durch eine etwas größere Öffnung des Außenelementes, beispielsweise in einem Kragen (der beispielsweise auf seiner Außenseite weitere Bauteile lagern kann), und einem etwas kleinerem Innenelement, beispielsweise einem Ringwulst, springen die Tragpunkte radial vor. Dabei können die Tragpunke am Außenelement oder am Innenelement ausgebildet sein. Eine einstückige Ausbildung, d.h. ein Anformen, ist bevorzugt. Die Abmessungen der Tragpunkte, insbesondere in radialer und axialer Richtung, sind vorzugsweise recht klein im Vergleich beispielsweise zum Durchmesser der Öffnung und sind für eine optimale Spaltbreite und damit optimale Schweißnaht ausgelegt. Wenigstens drei, vorzugsweise vier Tragpunkte, die gleichmäßig über den Umfang des Randes der Öffnung verteilt sind, ergeben eine ausreichend bestimmte Relativpositionierung von Außenelement und Innenelement.

Die erfindungsgemäße Anordnung kann beispielsweise ein Beschlag zwischen Sitzteil und Lehne eines Fahrzeugsitzes sein. Außenelemente oder Innenelemente können dann Beschlagteile, Adapter oder sonstige Bauteile des Beschlags einschließlich daran ausgebildete Flansche, Kragen oder Absätze sein. Ringförmige oder kreischeibenförmige Elemente sind bevorzugt, wenn keine exakte Relativposition erforderlich ist.

Die Erfindung ist vorzugsweise bei längseinstellbaren Fahrzeugsitzen von zweitürigen Kraftfahrzeugen mit komplexeren Beschlägen mit Neigungseinstellung und zentrischem Freischwenken der Lehne einsetzbar, kann aber auch für andere Fahrzeugsitze verwendet werden. Bei einer Verwendung des erfindungsgemäßen Beschlags zur Aktivierung der sogenannten "Easy-Entry-Funktion", bei welcher außer einem Freischwenken der Lehne noch ein Verfahren des Fahrzeugsitzes erfolgt, kann das Zurückschwenken der Lehne genau bei Erreichen der zuvor eingestellten Sitzlängsposition erfolgen.

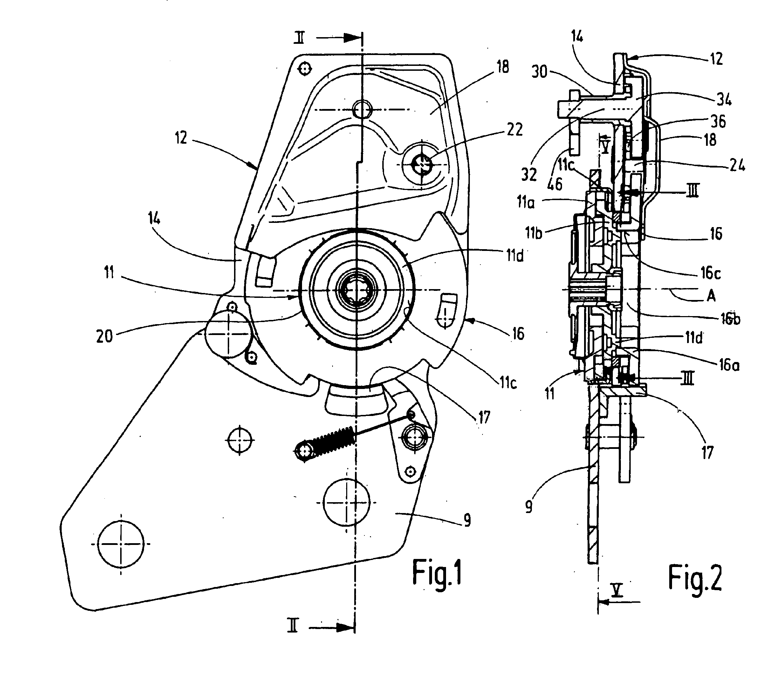

Im folgenden ist die Erfindung anhand eines in der Zeichnung dargestellten Ausführungsbeispiels näher erläutert. Es zeigen
- Fig. 1: eine Seitenansicht des Ausführungsbeispiels,
- Fig. 2: einen Schnitt durch das Ausführungsbeispiel entlang der Linie II-II in Fig. 1,
- Fig. 3: einen Schnitt durch einen Teil des Ausführungsbeispiels entlang der Linie III-III in Fig. 2,
- Fig. 4: eine schematische Seitenansicht eines Fahrzeugsitzes,
- Fig. 5: einen Schnitt entlang der Linie V-V in Fig. 2, und
- Fig. 6: eine vergrößerte Darstellung des Ausschnitts VI in Fig. 5.

Ein Fahrzeugsitz 1 für ein zweitüriges Kraftfahrzeug weist für die Neigungseinstellung, d.h. die langsame, feine Winkeländerung zwischen mehreren Gebrauchsstellungen, und das Freischwenken, d.h. die schnelle, große Winkeländerung von einer Gebrauchsstellung in eine freigeschwenkte Stellung als einer speziellen Nichtgebrauchsstellung, seiner Lehne 2 relativ zu seinem Sitzteil 3 auf seinen beiden Seiten je einen Beschlag 5. Der Beschlag 5 ist ein Ausführungsbeispiel für die erfindungsgemäße Anordnung. Auf der Außenseite des Fahrzeugsitzes 1 ist für die Neigungseinstellfunktion an einem der Beschläge 5 ein Handrad 7 und zwischen beiden Beschlägen 5 eine mit dem Handrad 7 verbundene Welle vorgesehen, während für die Freischwenkfunktion an der Lehne 2 ein Freischwenk-Bedienelement 8, beispielsweise ein Handhebel, beweglich angebracht ist.

Die Beschläge 5 sind jeweils mittels eines Adapters 9 an der Struktur des Sitzteils 3 zu befestigen ("sitzteilfest"). Jeder Beschlag 5 umfasst einen Lehnenneigungseinstellbeschlag, im folgenden kurz als Einstellbeschlag 11 bezeichnet, mit zwei relativ zu einander verdrehbaren Beschlagteilen 11a und 11b, und eine Freischwenkeinheit 12, welche ihrerseits ein drittes Beschlagteil 14 aufweist, das zur Befestigung des Beschlags 5 an der der Struktur der Lehne 2 dient ("lehnenfest").

Der Einstellbeschlag 11 ist in baulicher Hinsicht als eine scheibenförmige Einheit ausgebildet, wie sie beispielsweise in der DE 101 05 282 B4 beschrieben ist, deren Offenbarungsgehalt ausdrücklich einbezogen wird. Das erste Beschlagteil 11a und das zweite Beschlagteil 11b werden mittels eines Umklammerungsrings 11c in axialer Richtung zusammengehalten. Im Ausführungsbeispiel ist der Einstellbeschlag 11 als Getriebebeschlag ausgebildet, d.h. die beiden Beschlagteile 11a und 11b stehen mittels eines - vorliegend selbsthemmenden - Exzenterumlaufgetriebes miteinander in Getriebeverbindung, welches vorliegend ein spielfreies Feststellen der beiden Beschlagteile 11a und 11b ermöglicht und zum stufenlosen Verstellen eine Relativdrehung der beiden Beschlagteile 11a und 11b mit überlagerter Taumelbewegung erzwingt. Ein solcher Getriebebeschlag ist beispielsweise in der DE 44 36 101 A1 beschrieben, deren Offenbarungsgehalt ausdrücklich einbezogen wird. Die Drehung des Handrades 7 treibt den Getriebebeschlag an. Es sind aber auch andere Getriebebeschläge und - theoretisch - auch Rastbeschläge als Einstellbeschlag 11 einsetzbar. In letzterem entriegelt eine kleine Drehung des Handrades 7 oder eines ersatzweise vorgesehenen Hebels den Rastbeschlag. Der Einstellbeschlag 11 ist mit dem ersten Beschlagteil 11a und dem Umklammerungsring 11c fest mit dem Adapter 9 verbunden, d.h. das erste Beschlagteil 11a ist sitzteilfest. Hierzu weist der Adapter 9 eine ringförmige (oder gabelförmige) Aufnahme für den Einstellbeschlag 11 auf.

Die Freischwenkeinheit 12 weist ein - näherungsweise ringförmiges - Rastelement 16 auf, relativ zu welchem das dritte Beschlagteil 14 um eine Achse A drehbar gelagert ist. Die Achse A und ihre Lage innerhalb des Fahrzeugsitzes 1 definieren die vorliegend verwendeten Richtungsangaben. Da die Achse A - gegebenenfalls abgesehen von der Taumelbewegung, mit der zentralen Achse des Einstellbeschlags 11 zusammenfällt, handelt es sich vorliegend um ein zentrisches Freischwenken. Ein Anschlag 17 ist am Adapter 9 befestigt und steht von diesem axial ab. Das Rastelement 16 weist an einem Teil seines Umfangs eine radial nach innen versetzte, durch je eine Stufe begrenzte Aussparung auf, innerhalb derer der Anschlag 17 angeordnet ist. Durch Zusammenwirken des Anschlags 17 mit den Stufen des Rastelementes 16 wird der Winkel für die Neigungseinstellung der Lehne 2 begrenzt.

Für die Lagerung des dritten Beschlagteils 14 weist das Rastelement 16 vorliegend einen bezüglich der Achse A axial abstehenden Kragen 16a auf, auf welchem das dritte Beschlagteil 14 drehbar gelagert ist. Das dritte Beschlagteil 14 weist ebenfalls einen Kragen auf, der zum Rastelement 16 hin absteht, so dass Rastelement 16 und drittes Beschlagteil 14 voneinander beabstandet sind. Das dritte Beschlagteil 14 ist axial zwischen dem Rastelement 16 und dem Einstellbeschlag 11 angeordnet ist, so dass auf der vom Einstellbeschlag 11 abgewandten Seite mittels des Rastelementes 16 axial gesichert ist. Zur axialen Sicherung des dritten Beschlagteils 14 auf der dem Einstellbeschlag 11 zugewandten Seite, insbesondere vor der Montage der Freischwenkeinheit 12 und zur Bildung einer vormontierten Baugruppe, kann eine Haltescheibe vorgesehen sein, welche nach dem Aufsetzen des dritten Beschlagteils 14 auf den Kragen 16a der Rastelement 16 mit der Rastelement 16 verbunden wird, wobei sie das dritte Beschlagteil 14 hintergreift. Ein mit dem dritten Beschlagteil 14 verbundener Deckel 18 definiert einerseits einen Bauraum zwischen sich und dem über die Rastplatte 16 nach oben überstehenden dritten Beschlagteil 14. Anderseits ist der untere Rand des Deckels 18 als Halteklammer ausgebildet und übergreift, gegebenenfalls unter Zwischenlage eines Gleiters, z.B. aus Kunststoff, das Rastelement 16. Der Deckel 18 dient somit als weitere axiale Sicherung des dritten Beschlagteils 14.

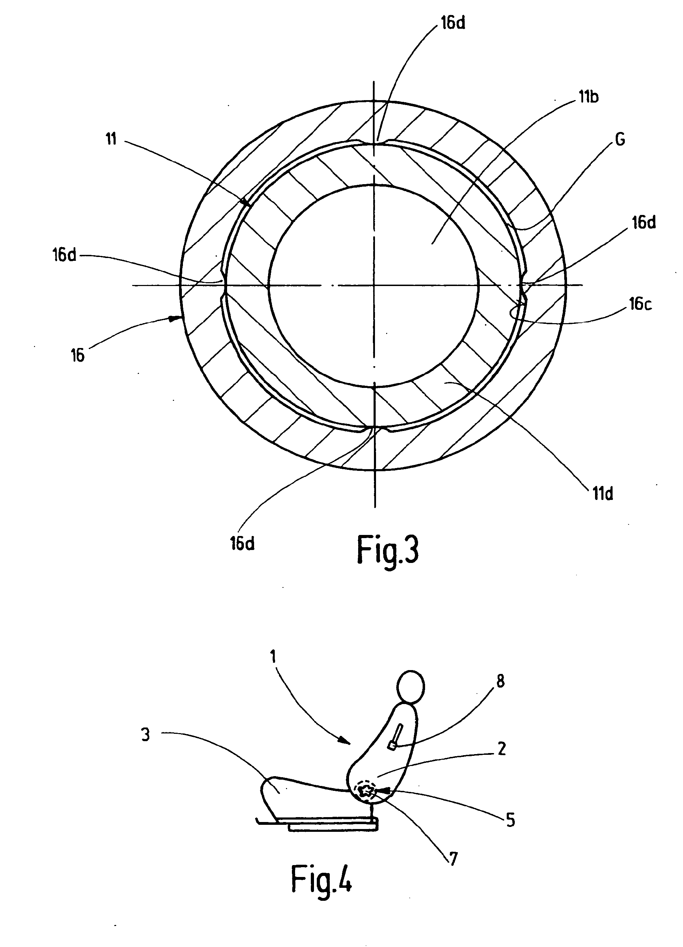

Das Rastelement 16 (und damit die Freischwenkeinheit 12) ist auf eine erfindungsgemäße Weise fest mit dem zweiten Beschlagteil 11b verbunden. Hierzu weist das Rastelement 16 in seinem Kragen 16a eine zentrale Öffnung 16b auf, mittels derer es auf einen Absatz 11d des zweiten Beschlagteils 11b geschoben ist, wie in Fig. 3 dargestellt. Der Kragen 16a definiert somit ein Außenelement, der Absatz 11d ein Innenelement. Der Innendurchmesser des Außenelementes (vorzugsweise etwa 50 mm) ist etwas größer als der Außendurchmesser des Innenelementes, so dass dazwischen ein radialer Spalt G gebildet wird, dessen radiale Breite beispielsweise weniger als 1 mm beträgt, vorzugsweise zwischen 0,2 mm und 0,6 mm. Am Rand 16c der zentralen Öffnung 16b, also am Außenelement, sind vier Tragpunkte 16d ausgebildet, vorzugsweise angeformt, welche in Umfangsrichtung um die Achse A herum um jeweils 90° zueinander versetzt angeordnet sind und welche radial nach innen vorspringen. Einer oder mehrere Tragpunkte 16d liegen direkt am Innenelement an, so dass der Spalt G eine definierte, konstante Mindest-Breite erhält. Vorliegend ist die radiale Abmessung der Tragpunkte 16d so bemessen, dass die Breite des Spaltes G etwas größer als die Mindest-Breite sein kann, so dass sich eine schwimmende Lagerung des Außenelementes auf dem Innenelement (oder umgekehrt) ergibt. Die Abmessung der Tragpunkte 16d in Umfangsrichtung beträgt vorzugsweise etwa 5 mm. Der Rand 16c ist somit über den größten Teil seines Umfangs vom Innenelement beabstandet. Die axiale Abmessung der Tragpunkte 16d entspricht vorzugsweise der axialen Abmessung des Spaltes G, so dass die Tragpunkte 16d in Umfangsrichtung verlaufende wulstförmige Gebilde sind. Die axiale Abmessung der Tragpunkte 16d kann auch größer als die axiale Abmessung des Spaltes G sein, so dass eher buckelförmige Gebilde vorliegen.

Bei der Verbindung der Freischwenkeinheit 12 mit dem Einstellbeschlag 11 wird in den Spalt G ein Draht aus einem Zusatzwerkstoff eingelegt, weicher dann durch einen Laserstrahl aufgeschmolzen wird, so dass eine sich bildende Schweißnaht 20 in den Spalt G eingebracht wird. Die Kombination aus Laserschweißen und dem Spalt G, dessen Breite mittels der Tragpunkte 16d eine definierte Mindest-Breite erhält, schafft eine sichere, rissfreie und verzugsarme Verbindung zwischen der Außenelement und Innenelement, also vorliegend zwischen Freischwenkeinheit 12 und dem Einstellbeschlag 11.

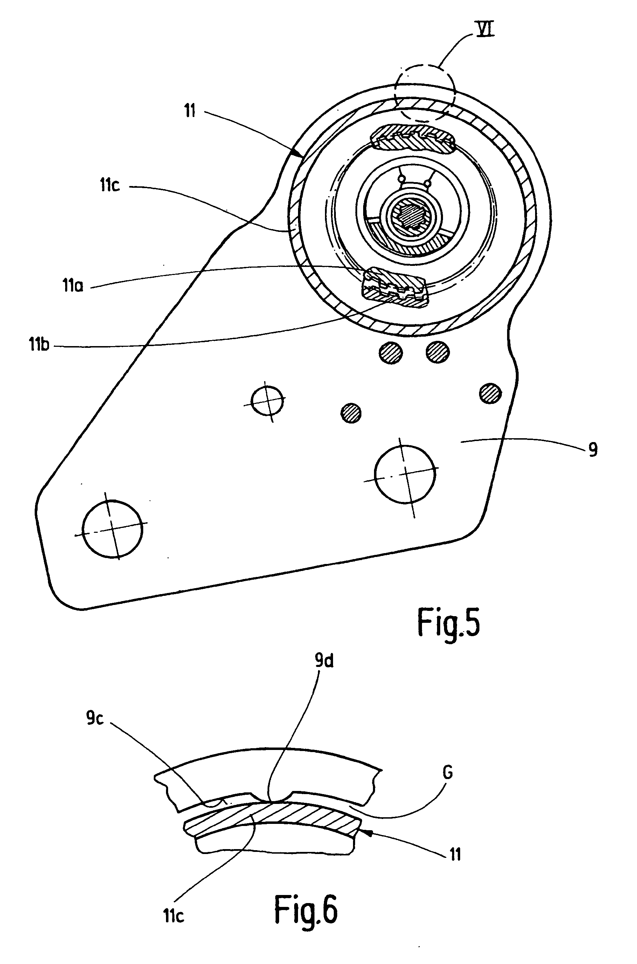

In gleicher, in Fig. 5 und 6 dargetsellter erfindungsgemäßer Weise ist der Adapter 9 fest mit dem Umklammerungsring 11c (oder alternativ dem ersten Beschlagteil 11a) verbunden. Der Adapter 9 weist eine Öffnung auf, mittels derer er den Umklammerungsring 11c aufnimmt. Der Adapter 9 definiert somit das Außenelement, der Umklammerungsring 11c das Innenelement. Die Abmessungen und Abmessungsverhältnisse entsprechen ungefähr den zuvor genannten Angaben. Der Innendurchmesser des Außenelementes (vorzugsweise etwa 50 mm) ist etwas größer als der Außendurchmesser des Innenelementes, so dass dazwischen ein radialer Spalt G gebildet wird, dessen radiale Breite beispielsweise weniger als 1 mm beträgt, vorzugsweise zwischen 0,2 mm und 0,6 mm. Am Rand 9c der Öffnung des Adapters 9, also am Außenelement, sind vier Tragpunkte 9d ausgebildet, vorzugsweise angeformt, welche in Umfangsrichtung bezüglich des Zentrums der Öffnung um jeweils 90° zueinander versetzt angeordnet sind und welche radial nach innen vorspringen. Einer oder mehrere Tragpunkte 9d liegen direkt am Innenelement an, so dass der Spalt G eine definierte, konstante Mindest-Breite erhält. Vorliegend ist die radiale Abmessung der Tragpunkte 9d so bemessen, dass die Breite des Spaltes G zumindest außerhalb des Anlagebereichs der Tragpunkte 9d etwas größer als die Mindest-Breite sein kann, so dass sich eine schwimmende Lagerung des Außenelementes auf dem Innenelement (oder umgekehrt) ergibt. Der Rand 9c ist über den größten Teil seines Umfangs vom Innenelement beabstandet.

Bei der Verbindung des Adapters 9 mit dem Einstellbeschlag 11 wird in den Spalt G neben dem Laserstrahl ein Draht aus einem Zusatzwerkstoff zugeführt, welcher dann durch einen Laserstrahl aufgeschmolzen wird, so dass eine sich bildende Schweißnaht 20 in den Spalt G eingebracht wird. Um auf der vom Laserstrahl abgewandten Seite des Adapters 9 ein Ausfließen des aufgeschmolzenen Zusatzwerkstoffs zu verhindern, also um ein Durchschweißen zu verhindern, ist vorzugsweise ein Sprengring auf dem Einstellbeschlag 11 aufgebracht, welcher den Spalt G auf der vom Laserstrahl abgewandten Seite des Adapters 9 verschließt. Die Kombination aus Laserschweißen und dem Spalt G, dessen Breite mittels der Tragpunkte 16d eine definierte Mindest-Breite erhält, schafft eine sichere, rissfreie und verzugsarme Verbindung zwischen der Außenelement und Innenelement, also vorliegend zwischen dem Adapter 9 und dem Einstellbeschlag 11.

Innerhalb des Bauraumes zwischen Deckel 18 und drittem Beschlagteil 14 sind verschiedene Bauteile vorgesehen. Auf dem dritten Beschlagteil 14 ist mittels eines Lagerbolzens 22 eine Klinke 24 schwenkbar gelagert, welche mit dem Rastelement 16 verriegelbar ist, und zwar spielfrei und außerhalb der Selbsthemmung. Im dritten Beschlagteil 14 sitzt vorzugsweise drehfest eine Lagerbuchse 30, welche beispielsweise in eine Öffnung des dritten Beschlagteils 14 eingenietet oder eingeschweißt ist. Eine Entriegelungswelle 32 ist mittels dieser Lagerbuchse 30 parallel zur Achse A und zum Lagerbolzen 22 drehbar gelagert. Auf der Entriegelungswelle 32 sitzt drehfest oder vorliegend mit der Entriegelungswelle 32 einteilig ausgebildet ein Fangelement 34, während ein - axial benachbart zum Fangelement 34 angeordnetes - Spannelement 36 schwenkbar auf der Lagerbuchse 30 gelagert ist. Somit ist die Entriegelungswelle 32 innen in der Lagerbuchse 30 und das Spannelement 36 außen auf der Lagerbuchse 30 gelagert. Das Fangelement 34 und das Spannelement 36 sind bei verriegeltem dritten Beschlagteil 14 auf die Klinke 24 ausgerichtet. Die Funktionsweise von Fangelement 34 und Spannelement 36 ist in der DE 44 39 644 A1 beschrieben, deren Offenbarungsgehalt ausdrücklich einbezogen wird. Das Spannelement 36 liegt mit einer exzentrisch zur Entriegelungswelle 32 gekrümmten Spannfläche in einem Winkel außerhalb des Selbsthemmungsbereichs an einer Anlagefläche der Klinke 24 an. Das Spannelement 36 wird von einer als beispielsweise Spiralfeder ausgebildeten Feder beaufschlagt, so dass das Spannelement 36 mit Vorspannung an der Klinke 24 anliegt. Dadurch ist das dritte Beschlagteil 14 spielfrei mit dem Rastelement 16 verriegelt. Das Fangelement 34 wird beispielsweise von einer Schrauben-Zugfeder beaufschlagt, welche am dritten Beschlagteil 14 eingehängt sein kann. Das Fangelement 34 und das Spannelement 36 sind miteinander mittels einer Schlitz-Zapfen-Führung mit einem Leerweg auf Mitnahme gekoppelt. Der Deckel 18 deckt die Klinke 24, das Fangelement 34, das Spannelement 36 und die Federn ab und schützt diese vor Verschmutzung.

In den Gebrauchsstellungen wird im Normalfall, d.h. beim normalen Sitzgebrauch, die Klinke 24 durch das Spannelement 36 in ihrer Position gehalten (gesichert), und das Fangelement 34 ist in geringem Abstand (bezogen auf die Abmessungen der Klinke 24) zur Klinke 24 angeordnet, wobei es vorzugsweise an einem Anschlag des dritten Beschlagteils 14 anliegt. Im Crashfall, wenn Crashkräfte auf die Klinke 24 wirken, die beispielsweise ein hohes Drehmoment auf das dritte Beschlagteil 14 ausüben, kann das Spannelement 36 wegen der fehlenden Selbsthemmung öffnen. Nach einer sehr geringfügigen Schwenkbewegung der Klinke 24 gelangt diese in Anlage an das Fangelement 34. Das Fangelement 34 stützt dann die Klinke 24 ab, welche innerhalb des Selbsthemmungsbereichs am Fangelement 34 anliegt, vorzugsweise tangential oder konzentrisch und möglichst flächig. Damit wird verhindert, dass die Klinke 24 öffnet. Somit verriegelt die vorbeschriebene Verriegelungsvorrichtung (bestehend aus der Klinke 24, dem Rastelement 16 als Gegenelement und dem Fangelement 34 und Spannelement 36 als Sicherungselementen) das dritte Beschlagteil 14 (und damit die Freischwenkeinheit 12) sowohl im Normalfall als auch im Crashfall.

Auf der vom Deckel 20 abgewandten Seite des dritten Beschlagteils 14 ist mit der Entriegelungswelle 32 ein Entriegelungshebel 46 drehfest verbunden, an welchem ein mit dem Freischwenk-Bedienelement 8 in Wirkverbindung stehender Seilzug befestigt ist. Alternativ kann die Entriegelungswelle 32 auch über einen elektrischen Aktuator, beispielsweise einen Stellmotor oder dergleichen, betätigt werden.

Das Freischwenken der Lehne 2, welches mittels des Freischwenk-Bedienelementes 8 ausgelöst wird, beginnt mit dem Entriegeln des dritten Beschlagteils 14 auf beiden Fahrzeugsitzseiten. Mittels des Seilzugs (und des Entriegelungshebels 46) wird die Entriegelungswelle 32 um ihre eigene Achse gedreht. Die Entriegelungswelle 32 nimmt das drehfest mir ihr verbundene Fangelement 34 mit, welches mittels der Schlitz-Zapfen-Führung 44 - nach Durchfahren des Leerwegs - das Spannelement 36 mitnimmt und dabei öffnet, d.h. das Spannelement 36 von der Klinke 24 trennt und entfernt. Die Klinke 24 ist dadurch freigegeben und kann wegen der fehlenden Selbsthemmung selbsttätig öffnen. In abgewandelter Ausführung kann das Fangelement 34 in Anlage an einen Entriegelungsfinger der Klinke 24 gelangen und diese mit der weiteren Schwenkbewegung aufziehen. Bei längseinstellbaren Fahrzeugsitzen 1 wird gleichzeitig oder zeitlich versetzt der Längseinsteller betätigt. Mit dem Vorschwenken der Lehne 2 aus der Gebrauchsstellung in die freigeschwenkte Stellung kann der Fahrzeugsitz 1 nach vorne geschoben werden. Wenn sich der Fahrzeugsitz 1 in einer vorderen Sitzlängsposition und die vorgeschwenkte Lehne 2 in der freigeschwenkten Stellung befindet, ist ein erleichterter Zugang zum Fond möglich. Die freigeschwenkte Stellung der Lehne 2 kann durch eine Festlegeklinke gesichert sein.

Um in die zuvor eingenommene Gebrauchsstellung zurückzukehren, wird zunächst der Fahrzeugsitz 1 wieder nach hinten verfahren, beispielsweise durch Zug an der Lehne 2. Spätestens wenn die zuvor eingenommene Sitzlängsposition erreicht ist, schwenkt die Lehne 2 nach hinten, gegebenenfalls nach Öffnen der Festlegeklinke. Die Klinke 24 fällt bei Erreichen der zuvor eingenommene Gebrauchsstellung wieder in das Rastelement 16 ein, so dass das dritte Beschlagteil 14 und damit der Beschlag 5 wieder verriegelt ist.

### Bezugszeichenliste

- 1: Fahrzeugsitz
- 2: Lehne
- 3: Sitzteil
- 5: Beschlag
- 7: Handrad
- 8: Freischwenk-Bedienelement
- 9: Adapter
- 9c: Rand der Öffnung des Adapters
- 9d: Tragpunkt (des Adapters)
- 11: Einstellbeschlag
- 11a: erstes Beschlagteil
- 11b: zweites Beschlagteil
- 11c: Umklammerungsring
- 11d: Absatz
- 12: Freischwenkeinheit
- 14: drittes Beschlagteil
- 16: Rastelement
- 16a: Kragen
- 16b: zentrale Öffnung
- 16c: Rand
- 16d: Tragpunkt (des Rastelementes)
- 17: Anschlag
- 18: Deckel
- 20: Schweißnaht
- 22: Lagerbolzen
- 24: Klinke
- 30: Lagerbuchse
- 32: Entriegelungswelle
- 34: Fangelement
- 36: Spannelement
- 46: Entriegelungshebel
- A: Achse
- G: Spalt

## Patentansprüche

1. Anordnung für einen Fahrzeugsitz, mit einem Innenelement (11c, 11d), einem Außenelement (9, 16a), welches eine mit einem Rand (9c, 16c) versehene Öffnung (16b) aufweist, die das Innenelement (11c, 11d) aufnimmt, und einer Schweißnaht (20), welche das Außenelement (9, 16a) mit dem Innenelement (11c, 11d) verbindet, wobei der Rand (16c) der Öffnung des Außenelementes (9, 16a) über den größten Teil seines Umfangs vom Innenelement (11c, 11d) unter Bildung eines radialen Spaltes (G) mit einer definierten Mindest-Breite beabstandet ist, und wobei die Schweißnaht (20) insbesondere unter Verwendung eines Zusatzwerkstoffes in den Spalt (G) eingebracht ist, **dadurch gekennzeichnet, dass** zur Bildung des Spaltes (G) wenigstens ein, vorzugsweise vier Tragpunkte (9d, 16d) vorgesehen ist bzw. sind, welcher bzw. welche vom Rand (16c) der Öffnung des Außenelementes oder vom Innenelement (11c, 11d) radial vorspringt bzw. vorspringen.

2. Anordnung nach Anspruch 1, **dadurch gekennzeichnet, dass** der Tragpunkt (16d) am Außenelement (9, 16a) oder am Innenelement (11c, 11d) angeformt ist.

3. Anordnung nach Anspruch 1 oder 2, **dadurch gekennzeichnet, dass** die vorgesehenen Tragpunkte (16d) in Umfangsrichtung gleichmäßig verteilt angeordnet sind.

4. Anordnung nach einem der vorhergehenden Ansprüche, **dadurch gekennzeichnet, dass** die Schweißnaht (20) eine mit Zusatzwerkstoff erzeugte Laser-Schweißnaht ist.

5. Anordnung nach Anspruch 4, **dadurch gekennzeichnet, dass** vor oder während der Einbringung der Schweißnaht (20) ein Draht aus Zusatzwerkstoff in den Spalt (G) eingebracht ist oder zugeführt wird.

6. Anordnung nach einem der vorhergehenden Ansprüche, **dadurch gekennzeichnet, dass** die Anordnung als ein Beschlag (5) für einen Fahrzeugsitz (1) ausgebildet ist, wobei der Beschlag (5) wenigstens einen Einstellbeschlag (11) zur Neigungseinstellung einer Lehne (2) des Fahrzeugsitzes (1) relativ zu einem Sitzteil (3) des Fahrzeugsitzes (1) aufweist.

7. Anordnung nach Anspruch 6, **dadurch gekennzeichnet, dass** der Einstellbeschlag (11) in baulicher Hinsicht als eine scheibenförmige Einheit ausgebildet ist und ein erstes Beschlagteil (11a), welches mit dem Sitzteil (3) zu verbinden ist, ein zweites Beschlagteil (11b), welches relativ zum ersten Beschlagteil (11b) verdrehbar ist, und einen Umklammerungsring (11c) aufweist, welcher das erste Beschlagteil (11a) und das zweite Beschlagteile (11b) in axialer Richtung zusammengehält, und dass der Beschlag (5) einen Adapter (9) aufweist, welcher das Außenelement bildet, während das erste Beschlagteil (11a) und/oder der Umklammerungsring (11c) das Innenelement bildet.

8. Anordnung nach Anspruch 6 oder 7, **dadurch gekennzeichnet, dass** der Beschlag (5) eine Freischwenkeinheit (12) zum zentrischen Freischwenken der Lehne (2) von wenigstens einer Gebrauchsstellung in eine freigeschwenkte Stellung, aufweist, wobei die Freischwenkeinheit (12) ein Rastelement (16), welches mit dem Einstellbeschlag (11) zu verbinden ist, ein drittes Beschlagteil (14), welches relativ zum Rastelement (16) um eine Achse (A) drehbar gelagert ist und welches mit der Lehne (2) zu verbinden ist, und eine Klinke (24), welche in der Gebrauchsstellung das dritte Beschlagteil (14) mit dem Rastelement (16) verriegelt, und dass das Rastelement (16), insbesondere ein Kragen (16a) desselben, das Außenelement bildet, während der Einstellbeschlag (11), insbesondere ein Absatz (11d) am Beschlagteil (11b), das Innenelement bildet.

9. Anordnung nach Anspruch 8, **dadurch gekennzeichnet, dass** das dritte Beschlagteil (14) auf dem Kragen (16a) des Rastelementes (16) gelagert ist.

10. Anordnung nach Anspruch 8 oder 9, **dadurch gekennzeichnet, dass** das dritte Beschlagteil (14) axial zwischen dem Rastelement (16) und dem Einstellbeschlag (11) angeordnet ist.

11. Anordnung nach Anspruch 10, **dadurch gekennzeichnet, dass** das dritte Beschlagteil (14) auf der vom Einstellbeschlag (11) abgewandten Seite mittels des Rastelementes (16) axial gesichert ist.

12. Anordnung nach einem Ansprüche 8 bis 11, **dadurch gekennzeichnet, dass** die Freischwenkeinheit (12) ein vorgespanntes Spannelement (36) zum Sichern der verriegelten Klinke (24) im Normalfall und ein Fangelement (34) zum Abstützen der Klinke (24) im Crashfall aufweist.

13. Fahrzeugsitz (1) mit einem Sitzteil (3) und einer Lehne (2), **gekennzeichnet durch** wenigstens einer Anordnung nach einem der vorhergehenden Ansprüche.

## Claims

1. Arrangement for a vehicle seat comprising an inner element (11c, 11d), an outer element (9, 16a) which has an opening (16b) provided with an edge (9c, 16c), said opening receiving the inner element (11c, 11d), and a weld seam (20), which connects the outer element (9, 16a) to the inner element (11c, 11d), the edge (16c) of the opening of the outer element (9, 16a) being spaced apart from the inner element (11c, 11d) over the largest part of its periphery, forming a radial gap (G) with a defined minimum width, and the weld seam (20) being introduced into the gap (G), in particular by using a filler material, **characterized in that** at least one, preferably four bearing points (9d, 16d) is or are provided for forming the gap (G), said bearing point(s) protruding radially from the edge (16c) of the opening of the outer element or from the inner element (11c, 11d).

2. Arrangement according to Claim 1, **characterized in that** the bearing point (16d) is molded on the outer element (9, 16a) or on the inner element (11c, 11d).

3. Arrangement according to Claim 1 or 2, **characterized in that** the bearing points (16d) which are provided are arranged uniformly distributed in the peripheral direction.

4. Arrangement according to one of the preceding claims, **characterized in that** the weld seam (20) is a laser weld seam produced with filler material.

5. Arrangement according to Claim 4, **characterized in that** before or during the introduction of the weld seam (20) a wire consisting of filler material is introduced into the gap (G) or supplied.

6. Arrangement according to one of the preceding claims, **characterized in that** the arrangement is configured as a fitting (5) for a vehicle seat (1), the fitting (5) comprising at least one adjustment fitting (11) for adjusting the inclination of a backrest (2) of the vehicle seat (1) relative to a seat part (3) of the vehicle seat (1).

7. Arrangement according to Claim 6, **characterized in that** the adjustment fitting (11) in structural terms is configured as a disk-shaped unit, and comprises a first fitting part (11a) which may be connected to the seat part (3), a second fitting part (11b) which may be rotated relative to the first fitting part (11b), and a clasping ring (11c) which holds together the first fitting part (11a) and the second fitting part (11b) in the axial direction and **in that** the fitting (5) comprises an adapter (9) which forms the outer element, whilst the first fitting part (11a) and/or the clasping ring (11c) form the inner element.

8. Arrangement according to Claim 6 or 7, **characterized in that** the fitting (5) comprises a free-pivoting unit (12) for central free-pivoting of the backrest (2) from at least one position of use into a freely-pivoted position, the free-pivoting unit (12) comprising a latching element (16) which may be connected to the adjustment fitting (11), a third fitting part (14) which is rotatably mounted relative to the latching element (16) about an axis (A) and which may be connected to the backrest (2) and a pawl (24) which in the position of use locks the third fitting part (14) to the latching element (16) and **in that** the latching element (16), in particular a collar (16a) thereof, forms the outer element, whilst the adjustment fitting (11), in particular a projection (11d) on the fitting part (11b), forms the inner element.

9. Arrangement according to Claim 8, **characterized in that** the third fitting part (14) is mounted on the collar (16a) of the latching element (16).

10. Arrangement according to Claim 8 or 9, **characterized in that** the third fitting part (14) is axially arranged between the latching element (16) and the adjustment fitting (11).

11. Arrangement according to Claim 10, **characterized in that** the third fitting part (14) on the side remote from the adjustment fitting (11) is axially secured by means of the latching element (16).

12. Arrangement according to one of Claims 8 to 11, **characterized in that** the free-pivoting unit (12) has a pretensioned clamping element (36) for securing the locked pawl (24) in the normal case and a capture element (34) for supporting the pawl (24) in the event of a crash.

13. Vehicle seat (1) comprising a seat part (3) and a backrest (2), **characterized by** at least one arrangement according to one of the preceding claims.

## Revendications

1. Agencement pour un siège de véhicule, comprenant un élément interne (11c, 11d), un élément externe (9, 16a), qui présente une ouverture (16b) pourvue d'un bord (9c, 16c), qui reçoit l'élément interne (11c, 11d), et un cordon de soudure (20), qui relie l'élément externe (9, 16a) à l'élément interne (11c, 11d), le bord (16c) de l'ouverture de l'élément externe (9, 16a) étant espacé sur la majeure partie de sa périphérie de l'élément interne (11c, 11d) en formant un interstice radial (G) ayant une largeur minimale définie, et le cordon de soudure (20) étant introduit notamment en utilisant un outil supplémentaire dans l'interstice (G), **caractérisé en ce que** pour la formation de l'interstice (G), au moins un, et de préférence quatre points de support (9d, 16d) est/sont prévus, lequel/lesquels fait/font saillie radialement depuis le bord (16c) de l'ouverture de l'élément externe ou depuis l'élément interne (11c, 11d).

2. Agencement selon la revendication 1, **caractérisé en ce que** le point de support (16d) est façonné sur l'élément externe (9, 16a) ou sur l'élément interne (11c, 11d).

3. Agencement selon la revendication 1 ou 2, **caractérisé en ce que** les points de support prévus
(16d) sont disposés de manière répartie uniformément dans la direction périphérique.

4. Agencement selon l'une quelconque des revendications précédentes, **caractérisé en ce que** le cordon de soudure (20) est un cordon de soudure laser produit avec un matériau supplémentaire.

5. Agencement selon la revendication 4, **caractérisé en ce qu'**avant ou pendant l'introduction du cordon de soudure (20), un fil en matériau supplémentaire est introduit ou guidé dans l'interstice (G).

6. Agencement selon l'une quelconque des revendications précédentes, **caractérisé en ce que** l'agencement est réalisé sous forme de ferrure (5) pour un siège de véhicule (1), la ferrure (5) présentant au moins une ferrure d'ajustement (11) pour l'ajustement de l'inclinaison d'un dossier (2) du siège de véhicule (1) par rapport à une partie de siège (3) du siège de véhicule (1).

7. Agencement selon la revendication 6, **caractérisé en ce que** la ferrure d'ajustement (11) est réalisée du point de vue de la construction sous forme d'unité en forme de disque et présente une première partie de ferrure (11a), qui doit être connectée à la partie de siège (3), une deuxième partie de ferrure (11b) qui peut être tournée par rapport à la première partie de ferrure (11a) et une bague de serrage (11c) qui maintient ensemble la première partie de ferrure (11a) et la deuxième partie de ferrure (11b) dans la direction axiale, et **en ce que** la ferrure (5) présente un adaptateur (9) qui forme l'élément externe tandis que la première partie de ferrure (11a) et/ou la bague de serrage (1c) forme l'élément interne.

8. Agencement selon la revendication 6 ou 7, **caractérisé en ce que** la ferrure (5) présente une unité de pivotement libre (12) pour le libre pivotement central du dossier (2) depuis au moins une position d'utilisation dans une position librement pivotée, l'unité de pivotement libre (12) présentant un élément d'encliquetage (16) qui doit être connecté à la ferrure d'ajustement (11), une troisième partie de ferrure (14) qui est montée de manière à pouvoir tourner autour d'un axe (A) par rapport à l'élément d'encliquetage (16) et qui doit être connectée au dossier (2), et un cliquet (24) qui, dans la position d'utilisation, verrouille la troisième partie de ferrure (14) à l'élément d'encliquetage (16), et **en ce que** l'élément d'encliquetage (16), notamment un rebord (16a) de celui-ci, forme l'élément externe, tandis que la ferrure d'ajustement (11), notamment un épaulement (11d) sur la partie de ferrure (11b), forme l'élément interne.

9. Agencement selon la revendication 8, **caractérisé en ce que** la troisième partie de ferrure (14) est montée sur le rebord (16a) de l'élément d'encliquetage (16).

10. Agencement selon la revendication 8 ou 9, **caractérisé en ce que** la troisième partie de ferrure (14) est disposée axialement entre l'élément d'encliquetage (16) et la ferrure d'ajustement (11).

11. Agencement selon la revendication 10, **caractérisé en ce que** la troisième partie de ferrure (14) est fixée axialement du côté opposé à la ferrure d'ajustement (11) au moyen de l'élément d'encliquetage (16).

12. Agencement selon l'une quelconque des revendications 8 à 11, **caractérisé en ce que** l'unité de pivotement libre (12) présente un élément de serrage précontraint (36) pour la fixation du cliquet (24) verrouillé en cas normal et un élément de capture (34) pour supporter le cliquet (24) en cas de collision.

13. Siège de véhicule (1) comprenant une partie de siège (3) et un dossier (2), **caractérisé par** au moins un agencement selon l'une quelconque des revendications précédentes.
